# EUROPEAN PATENT SPECIFICATION

(11) **EP 3 450 137 B1**
(45) Date of publication and mention of the grant of the patent: **11.03.2020**
(21) Application number: 17208293.5
(22) Date of filing: 19.12.2017
(51) Int. Cl.: B29C 64/106, B29C 64/112, B29C 64/118, B29C 64/35, B29C 64/393, B33Y 10/00, B33Y 30/00, B33Y 40/00, B33Y 50/02

(54) **3D PRINTER HAVING MAINTENANCE STATION FOR PRINT HEAD AND METHOD FOR CONTROLLING THE SAME**
3D-DRUCKER MIT WARTUNGSSTATION FÜR DRUCKKOPF UND VERFAHREN ZU DESSEN STEUERUNG
IMPRIMANTE 3D AYANT UNE STATION DE MAINTENANCE DE TÊTE D'IMPRESSION ET SON PROCÉDÉ DE COMMANDE

(30) Priority: 28.08.2017 CN 201710749501
(43) Date of publication of application: 06.03.2019
(73) Proprietor: XYZprinting, Inc., New Taipei City 22201 (TW); Kinpo Electronics, Inc., New Taipei City 22201 (TW)
(72) Inventor: LIEN, Ting-Hsiang, 22201 Shenkeng Dist., New Taipei City (TW); HSIEH, Shih-Sen, 22201 Shenkeng Dist., New Taipei City (TW)
(74) Representative: 2K Patentanwälte Blasberg Kewitz & Reichel

(56) References cited:
- WO-A1-2016/003277
- US-A1- 2016 059 491
- US-A1- 2017 129 181

## Description

### BACKGROUND OF THE INVENTION

### Field of the Invention

The present disclosure relates to 3D printer, especially to a 3D printer having maintenance station for print head and method for controlling the same.

### Description of Related Art

Due to the maturity of 3D printing, and the size down as well as cost down of 3D printer, the 3D printer become popular these years. Some manufactures also propose 3D printer capable of printing 3D model with full color to render the 3D printer more acceptable by user.

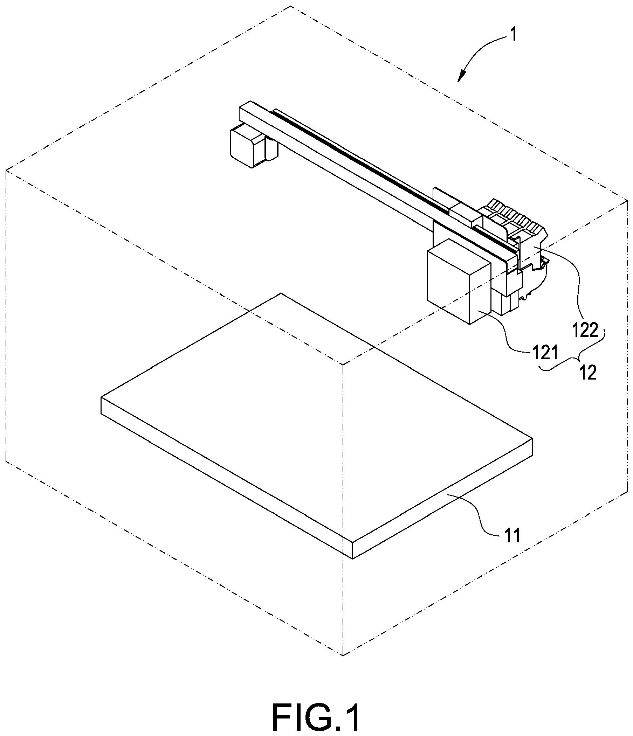

Fig. 1 shows the schematic view of the 3D printer in related art. As shown in Fig. 1, the related-art 3D printer 1 mainly comprises a print platform 11 and print head 12. The print head 12 comprises a 3D nozzle 121 for spraying forming material to construct the printed object and a 2D nozzle 122 for spraying ink to color the printed object. Therefore, the 3D printer 1 may construct the full-color 3D model by stacking a plurality of colored printed objects.

However, the above-mentioned 3D nozzle 121 and 2D nozzle 122 do not have the same relative coordinate with respect to the 3D printer 1 such that the 3D printer 1 cannot simultaneously control the 3D nozzle 121 and 2D nozzle 122 for movement and perform printing with a single 3D file. Therefore, it is an important issue to effectively and precisely position (locate) the 3D nozzle 121 and 2D nozzle 122.

Moreover, the related-art 3D printer 1 mainly uses the ink nozzle of the present 2D printer as the above-mentioned 2D nozzle 122. It is also an important issue to keep the 2D nozzle 122 wet during printing process to avoid the jam of 2D nozzle 122 due to dried ink.

3D printers as described above are known to the skilled artist from e.g. US 2017/129181 A1, WO 2016/003277 A1 and US 2016/059491 A1.

### SUMMARY OF THE INVENTION

The problem the invention wants to solve is to provide a 3D printer having maintenance station for print head and method for controlling the same, wherein initial positioning can be performed to 2D nozzle and 3D nozzle with single action, and the 2D nozzle can precisely enter the maintenance station for obtaining maintenance there.

This problem is solved by a 3D printer according to claim 1 and a method according to claim 7. Advantageous embodiments are the subject of the dependent claims.

According to claim 1, the invention provides a 3D printer, comprising: a print platform configured to support a printed object; a printing home location defined in the 3D printer; a print head comprising a 2D nozzle and a 3D nozzle, the print head comprising a positioning point, the 2D nozzle and the 3D nozzle respectively having a location offset with respect to the positioning point; a maintenance station; and a positioning sensor configured to sense the positioning point to facilitate positioning for the print head; wherein the 3D printer is configured to control the print head to move toward the printing home location and control the positioning sensor to sense the positioning point when the 3D printer enters a working status; the 3D printer is configured to perform an initial positioning for the 2D nozzle and the 3D nozzle based on the two location offsets and the positioning point and to start printing the printed object after the initial positioning is finished; wherein the 3D printer is configured to control the print head to move toward the maintenance station and control the positioning sensor to sense the positioning point when the 3D printer enters a non-working status; the 3D printer is configured to perform a compensation movement for the 2D nozzle based on the location offset of the2D nozzle and the positioning point and to move the 2D nozzle to enter a working zone of the maintenance station for maintenance.

In comparison with the related-art 3D printer, the 3D printer of the present disclosure can perform initial positioning for 2D nozzle and 3D nozzle with single action, and the 2D nozzle can precisely enter the maintenance station for obtaining maintenance there and ensuring the normal operation thereof.

### BRIEF DESCRIPTION OF DRAWING

One or more embodiments of the present disclosure are illustrated by way of example and not limitation in the figures of the accompanying drawings, in which like references indicate similar elements. These drawings are not necessarily drawn to scale.
Fig. 1 shows the schematic view of the 3D printer in related art.
Fig. 2 shows a top view of the 3D printer according to the first embodiment of the present disclosure.
Fig. 3A is a front view of the print head according to the first embodiment of the present disclosure.
Fig. 3B is a side view of the print head according to the first embodiment of the present disclosure.
Fig. 4A shows the first control flowchart according to the first embodiment of the present disclosure.
Fig. 4B shows the second control flowchart according to the first embodiment of the present disclosure.
Fig. 5A is schematic view showing the first operation of the print head according to the first embodiment.
Fig. 5B is schematic view showing the second operation of the print head according to the first embodiment.
Fig. 5C is schematic view showing the third operation of the print head according to the first embodiment.
Fig. 5D is schematic view showing the fourth operation of the print head according to the first embodiment.
Fig. 5E is schematic view showing the fifth operation of the print head according to the first embodiment.
Fig. 5F is schematic view showing the sixth operation of the print head according to the first embodiment.
Fig. 6 is a top view for the 3D printer 1 according to the second embodiment of the present disclosure.

### DETAILED DESCRIPTION OF THE INVENTION

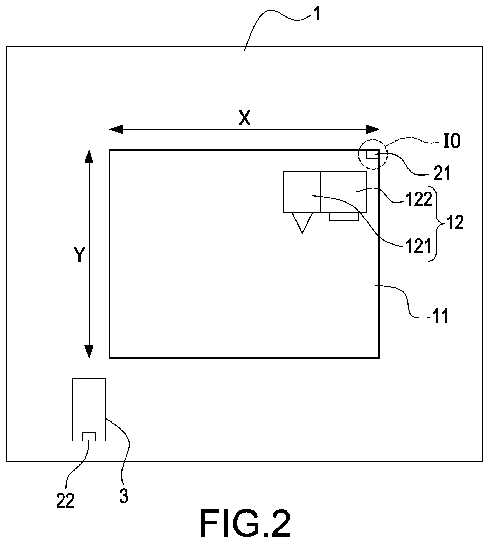

Fig. 2 shows a top view of the 3D printer according to the first embodiment of the present disclosure. The present disclosure mainly discloses a 3D printer 1 with maintenance station for print head (hereinafter, 3D printer 1). As shown in Fig. 2, the 3D printer 1 mainly comprises a print platform 11, a print head 12, a plurality of positioning sensors and a maintenance station 3. It should be noted the positioning sensors in this embodiment are exemplified with plural number (such as the first positioning sensor 21 and the second positioning sensor 22 shown in Fig. 2); however, the 3D printer 1 may have only one positioning sensor in other embodiment. Therefore, the number of the positioning sensor is not limitation in this disclosure.

In the embodiment shown in Fig. 2, the print head 12 has integrally arranged 3D nozzle 121 and 2D nozzle 122, where the 3D nozzle 121 is used for spraying forming material to construct the printed object and the 2D nozzle 122 is used for spraying ink to color the printed object. Therefore, the 3D printer 1 may construct the full-color 3D model by stacking a plurality of colored printed objects.

The above-mentioned 2D nozzle 122 may utilize the ink nozzle of current market-available 2D printer. The maintenance station 3 is also an element in current market-available 2D printer, which is use to clean and maintain the ink nozzle to keep the ink nozzle wet. One of the technology features of the present disclosure is that the print head 12 comprises both the 3D nozzle 121 and the 2D nozzle 122. Therefore, the 3D printer 1 needs to periodically interrupt the printing process and to move the print head 12 into the maintenance station 3 for getting maintenance there. Therefore, the 3D printer 1 ensures the normal operation of the 2D nozzle 122 by the maintenance station 3. The 2D nozzle 122 can be prevented from jam by the dried ink, which is caused by long idle time or accumulated ink.

As shown in Fig. 2, the first positioning sensor 21 is arranged on the printing platform 11 and the second positioning sensor 22 is arranged in the maintenance station 3. The 3D printer 1 has a printing home location (or referred to as initial printing point) I0 defined by a processor (not shown). More particularly, the printing home location I0 is defined within the 3D printer 1 and has a specific coordinate (such as [0, 0]), whereby the 3D printer 1 may perform positioning for the print head 12 with the help of the printing home location I0. In this embodiment, the printing home location I0 is defined on the first positioning sensor 21.

In the embodiment shown in Fig. 2, the first positioning sensor 21 is arranged at an edge of the print platform 11 (namely, the printing home location I0 is defined at the edge of the print platform 11). In other embodiments, the 3D printer 1 may set the first positioning sensor 21 outside the print platform 11 (namely, the printing home location I0 is defined outside the print platform 11). For convenience of description, the below embodiment is exemplified with the first positioning sensor 21 and the printing home location I0 being defined on the print platform 11).

The above mentioned printing home location is a virtual location (in the embodiment, the coordinate of the printing home location I0 is equal to the coordinate of the first positioning sensor 21). The 3D printer moves the print head 12 to the printing home location I0 before beginning printing, thus perform initial positioning for the print head 12. Namely, the 3D printer 1 moves the print head 12 to the printing home location I0 (or Home point) to perform a return-to-zero position operation.

Moreover particularly, the 3D printer 1 moves the print head 12 through stepper motor (not shown) and the above-mentioned return-to-zero position operation is to set the related parameters of the stepper motor to zero. The stepper motor is well known in the related art and is not described in detail here.

After initial positioning, the 3D printer 1 re-sets the coordinate (such as [0, 0]) of the print head 12 with respect to the x-axis coordinate and y-axis coordinate of the print platform 11. Therefore, the print head 12 can be precisely controlled to move on the print platform 11. The 3D nozzle 121 and the 2D nozzle 122 can be precisely controlled to respectively extrude forming material and spray ink at corresponding location of the print platform 11.

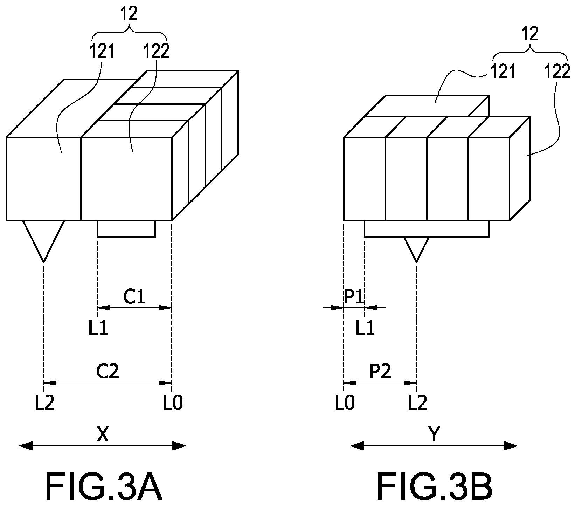

With reference to Figs. 3A and 3B, Fig. 3A is a front view of the print head 12 according to the first embodiment of the present disclosure and Fig. 3B is a side view of the print head 12 according to the first embodiment of the present disclosure. In the embodiment, a positioning point L0 is arranged at the print head 12. The 3D printer 1 mainly performs positioning for the positioning point L0 when performing the initial positioning for the print head 12. More particularly, the 3D printer 1 moves the positioning point L0 to the printing home location I0 to re-set the coordinate of the positioning point L0 with respect to the x axis coordinate and y axis coordinate of the print platform 11.

In this embodiment, the 3D nozzle 121 and the 2D nozzle 122 respectively has a location offset with respect to the positioning point L0. Moreover particularly, the location offset includes an x-axis offset (or referred to as transversal offset) with respect to x axis and a y-axis (or referred to as longitudinal offset) with respect to y axis.

As shown in Fig. 3A and 3B, the print head 12 of the present disclosure includes the 3D nozzle 121 and the 2D nozzle 122 (namely, the 3D nozzle 121 and the 2D nozzle 122 are arranged on the same control rod). The 2D nozzle 122 has a 2D nozzle positioning point L1 and the 3D nozzle 121 has a 3D nozzle positioning point L2. Moreover, a first transversal offset C1 and a first longitudinal offset PI are present between the 2D nozzle positioning point L1 of the 2D nozzle 122 and the positioning point L0; while a second transversal offset C2 and a second longitudinal offset P2 are present between the 3D nozzle positioning point L2 of the 3D nozzle 121 and the positioning point L0. In the present disclosure, the 3D print 1 may use arbitrary point on the print head 12 as the positioning point L0, and is not limited by example shown in Fig. 3A and 3B.

Moreover particularly, the first transversal offset C1 is equal to the distance between the ink outlet of the 2D nozzle 122 and the positioning point L0 along x axis. The first longitudinal offset PI is equal to the distance between the ink outlet of the 2D nozzle 122 and the positioning point L0 along y axis. Similarly, the second transversal offset C2 is equal to the distance between the extrusion outlet (for forming material) of the 3D nozzle 121 and the positioning point L0 along x axis. The second longitudinal offset P2 is equal to the distance between the extrusion outlet (for forming material) of the 3D nozzle 121 and the positioning point L0 along y axis.

In another embodiment, the ink outlet of the 2D nozzle 122 may be directly set as the positioning point L0 for the print head 12 in manufacturer site. In this circumstance, there is no offset between the 2D nozzle 122 and the positioning point L0 for the print head 12, while there are transversal offset and longitudinal offset between the 3D nozzle 121 and the positioning point L0. Namely, the transversal offset is equal to the distance between the 3D nozzle 121 and the 2D nozzle 122 along x axis; the longitudinal offset is equal to the distance between the 3D nozzle 121 and the 2D nozzle 122 along y axis.

In still another embodiment, the extrusion outlet (for forming material) of the 3D nozzle 121 may be directly set as the positioning point L0 for the print head 12 in manufacturer site. In this circumstance, there is no offset between the 3D nozzle 121 and the positioning point L0 for the print head 12, while there are transversal offset and longitudinal offset between the 2D nozzle 122 and the positioning point L0. Namely, the transversal offset is equal to the distance between the 2D nozzle 122 and the 3D nozzle 121 along x-axis; the longitudinal offset is equal to the distance between the 2D nozzle 122 and the 3D nozzle 121 along y-axis. However, the scope of the present disclosure is not limited by above exemplary example.

One of the technology features of the present disclosure is that the 3D printer 1 performs positioning for the print head (namely, setting the coordinate for the print head 12) when printing starts (namely, the 3D printer 1 enters working status). Therefore, the 3D printer 1 controls the print head 12 to move toward the printing home location I0 and finishes the positioning of the print head 12 when one of the positioning sensors (such as the first positioning sensor 21 shown in Fig. 2) senses the printing home location I0 of the print head 12.

More particularly, in one embodiment, the positioning sensor may be infrared sensor or photo sensor. During positioning, the 3D printer 1 moves the print head 12 to the coordinate of the positioning sensor (for example, the positioning sensor arranged on the print head has coordinated of [0, 0]. The 3D printer 1 re-sets the current coordinate of the print head 12 as [0,0] and the positioning for the print head 12 is finished when the print head 12 is moved toward the positioning sensor and the positioning sensor senses the positioning point L0 of the print head 12. However, the above-mentioned description is only an example of the subject disclosure and is not limitation of the disclosure.

After the positioning of the print head 12 is finished (namely, the positioning point L0 reaches the first positioning sensor 21), the 3D printer 1 finishes the initial positioning for the 2D nozzle 122 (namely, the coordinate of the 2D nozzle 122 is set) by the positioned positioning point L0, the first transversal offset C1 and the first longitudinal offset PI. The 3D printer 1 finishes the initial positioning for the 3D nozzle 121 (namely, the coordinate of the 3D nozzle 121 is set) by the positioned positioning point L0, the second transversal offset C2 and the second longitudinal offset P2. Therefore, the 3D printer 1 can finish the positioning for the two nozzles 121 and 122 by one positioning operation, which is very convenient.

Another of the technology features of the present disclosure is that the 3D printer 1 has the maintenance station 3 arranged in the main body thereof and sets one of the positioning sensor (such as the second positioning sensor 22 in Fig. 2) in the maintenance station 3. However, the maintenance station 3 may also be arranged outside the print platform 3, on the print platform 3 or inside the print platform 3. The above-mentioned description is only an example of the subject disclosure and is not limitation of the disclosure.

When the 3D printer 1 decides that the 2D nozzle 122 need maintenance (such as the 3D printer 1 entering interrupt status or non-working status), the 3D printer 1 controls the print head 12 to move toward the maintenance station 3. The 3D printer 1 then finishes the positioning for the print head 12 when the second positioning sensor 22 senses the positioning point L0 of the print head 12.

After the print head 12 is positioned (namely, the positioning point L0 reaches the second positioning sensor 22), the print head 12 is then located in the maintenance station 3, namely, the 2D nozzle 122 is not aligned with the working zone of the maintenance station 3. At this time, the 3D printer 1 controls the print head 12 to perform compensation movement by the positioned positioning point L0, the first transversal offset C1 and the first longitudinal offset P1 such that the 2D nozzle 122 enters the maintenance station 3 and is subject to the maintenance operation of the maintenance station 3. More particularly, the 3D printer 1 moves the 2D nozzle 122 to be completely within the working zone of the maintenance station 3 by the compensation movement.

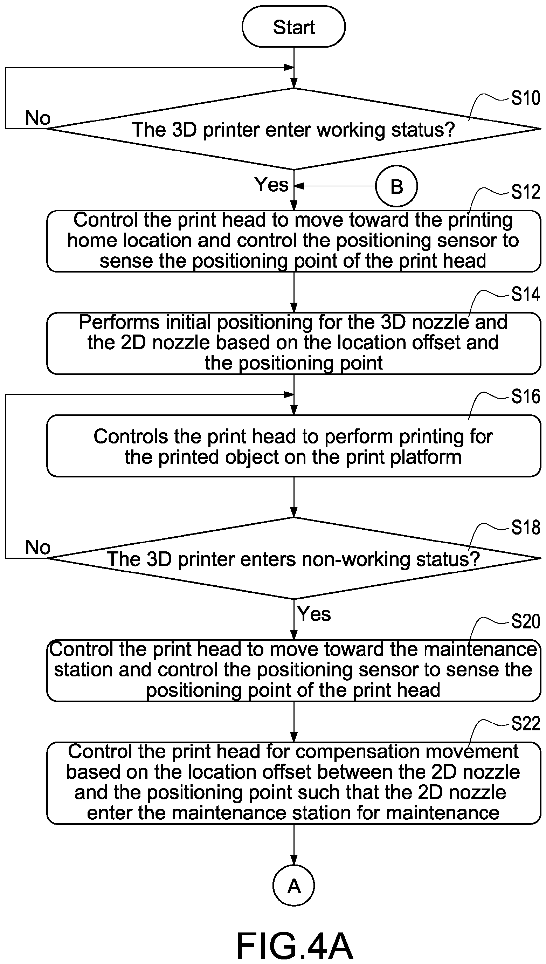

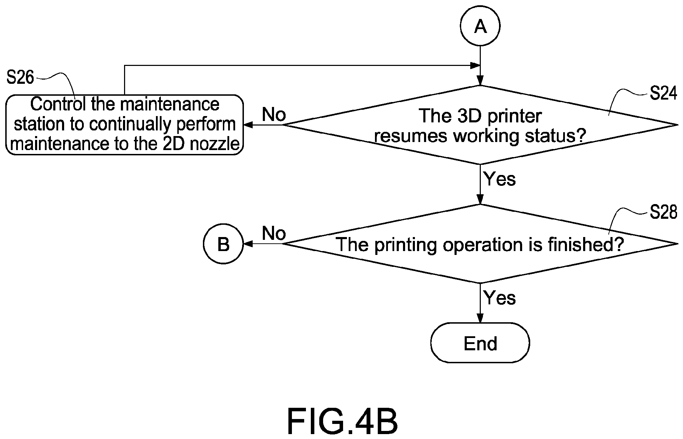

With reference to Figs. 4A and 4B, Fig. 4A shows the first control flowchart according to the first embodiment of the present disclosure, and Fig. 4B shows the second control flowchart according to the first embodiment of the present disclosure. The present disclosure further discloses the control method for print head of the 3D printer (hereinafter the control method). The control method is mainly used for the 3D printer shown in Figs. 2, 3A, and 3B.

At first, the processor (not shown) of the 3D printer 1 determines whether the 3D printer 1 starts printing process, namely, whether the 3D printer 1 enters the working status (step S10). The method returns to step S10 when the 3D printer 1 does not enter the working status (for example, the 3D printer 1 waits in standby status). The method performs step S12 when the 3D printer 1 enters the working status.

After entering working status, the 3D printer 1 first controls the print head 12 to move toward the printing home location I0 and controls the positioning sensor corresponding to the printing home location I0 to sense the positioning point L0 of the print head 12 (step S12). In this embodiment, the 3D printer 1 has a first positioning sensor 21 arranged on the print platform 11 and the printing home location I0 is defined on the first positioning sensor 21. In the step S12, the 3D printer 1 controls the print head 12 to move toward the printing home location I0 and finishes the positioning of the print head 12 when the positioning point L0 of the print head 12 reaches the first positioning sensor 21.

After the step S12, the 3D printer 1 further performs initial positioning for the 3D nozzle 121 and the 2D nozzle 122 based on the location offset between the positioning point L0 and the 3D nozzle 121 and the 2D nozzle 122 on the print head 12 (step S14). More particularly, the 3D printer 1 performs the initial positioning for the 2D nozzle 122 based on the first transversal offset C1 and the first longitudinal offset PI between the positioning point L0 and the 2D nozzle 122, thus set the relative coordinate of the 2D nozzle 122 with respect to the print platform 11. Moreover, the 3D printer 1 performs the initial positioning for the 3D nozzle 121 based on the second transversal offset C2 and the second longitudinal offset P2 between the positioning point L0 and the 3D nozzle 121, thus set the relative coordinate of the 3D nozzle 121 with respect to the print platform 11. Therefore, the 3D printer 1 may simultaneously achieve the initial positioning of the two nozzles 121 and 122 by single movement of the print head 12 (namely, performing the return-to-zero position operation simultaneously for the two nozzles 121 and 122).

For example, the 3D printer 1 may set the coordinate of the positioning point L0 in the print head 12 as [0, 0] after step S12. If the first transversal offset C1 of the 2D nozzle 122 with respect to the positioning point L0 is 1cm and the first longitudinal offset PI of the 2D nozzle 122 with respect to the positioning point L0 is 1.5cm, then the 3D printer 1 may set the coordinate of the 2D nozzle 122 to be [1, 1.15] after the step S14. However, the scope of the present disclosure is not limited by above example.

After the step S14, the 3D printer 1 has finished the positioning for the 3D nozzle 121 and the 2D nozzle 122 and then controls the print head 12 to perform printing for the printed object on the print platform 11 according to the imported 3D file (not shown) (step S16). More particularly, the 3D printer 1 controls the 3D nozzle 121 to move on the print platform 11 and the 3D nozzle 121 extrudes forming material at the corresponding location to form the printed object. Alternatively, the 3D printer 1 controls the 2D nozzle 122 to move on the print platform 11 and the 2D nozzle 122 sprays ink at the corresponding location to color the printed object.

During printing process, the processor of the 3D printer 1 continuously determines whether the 3D printer 1 enters non-working status (step S18). In one embodiment, the 3D printer 1 automatically enters the non-working status (or referred to as the interrupt status) after the 3D printer 1 had entered the working status for predetermined time duration. In another embodiment, the 3D printer 1 may enter the non-working status after the printed object of a printing layer is finished. The above mentioned printing layer is known to the people with ordinary skill in the related art and the detail thereof is not stated here for brevity.

The 3D printer 1 returns to step S16 to continually control the print head 12 to perform printing operation in working status if the processor determines that the condition for entering the non-working status is not reached. The 3D printer 1 controls the print head 12 to stop printing (namely, the 3D printer 1 controls the 3D nozzle 121 to stop extruding the forming material and controls the 2D nozzle 122 to stop spraying ink). Afterward, the 3D printer 1 controls the print head 12 to move toward the maintenance station 3 and controls the positioning sensor corresponding to the maintenance station 3 to sense the positioning point L0 (step S20).

In this embodiment, the 3D printer 1 has a second positioning sensor 22 arranged in the maintenance station 3. In step S20, the 3D printer 1 controls the print head 12 to move toward the maintenance station 3 and the positioning of the print head 12 is finished when the positioning point L0 of the print head 12 reaches the second positioning sensor 22.

The maintenance station 3 performs maintenance for the 2D nozzle 122 during the non-working status. After step S20, the print head 12 aligns the working zone of the maintenance station 3 with the positioning point L0 such that the maintenance station 3 cannot perform the maintenance operation. Therefore, after step S20, the 3D printer 1 further controls the print head 12 for compensation movement based on the location offset between the positioning point L0 and the 2D nozzle 122 (namely, the above mentioned first transversal offset C1 and the first longitudinal offset P1) such that the 2D nozzle 122 enters the maintenance station 3 (step S22) and precisely aligns with the working zone of the maintenance station 3. Therefore, the maintenance station 3 performs maintenance for the 2D nozzle 122.

By the control method of the present disclosure, the 2D nozzle 122 can precisely enter the maintenance station 3 and receives the maintenance from the maintenance station 3, which is very convenient.

Afterward, as shown in Fig. 4B, the processor continually determines whether the 3D printer 1 resumes working status, namely, whether the maintenance is finished (step S24) during the maintenance of the 2D nozzle 122. The 3D printer 1 controls the maintenance station 3 to continually perform maintenance to the 2D nozzle 122 (step S26) when the processor determines that the 3D printer 1 does not resume working status. The processor further determines whether the printing operation is finished (step S28) when the processor determines that the 3D printer 1 resumes working status.

If the printing process for the 3D model (not shown) is not yet finished, the 3D printer 1 returns its operation to step S12 to control the print head 12 for initial positioning, and the 3D printer 1 enters working status for continually performing the printing process after finishing the initial positioning. The 3D printer 1 ends the control method of the present invention if the printing process for the 3D model is finished.

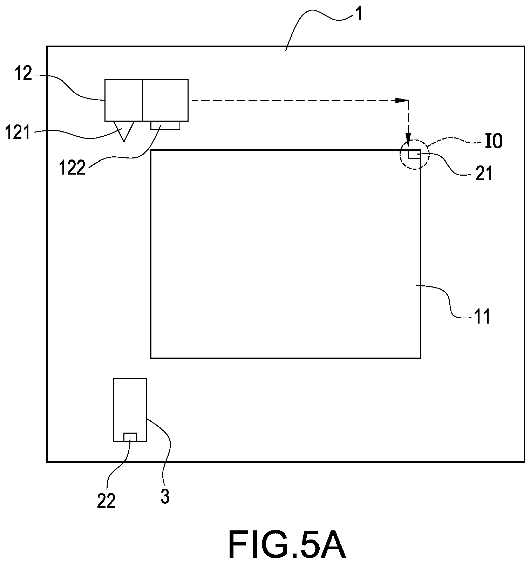

Figs. 5A to 5F are schematic views showing the first operation to the sixth operation of the print head according to the first embodiment. In this embodiment, the 3D printer 1 has at least two positioning sensors, where the first positioning sensor 21 is arranged corresponding to the location of the printing home location I0, and the second positioning sensor 22 is arranged corresponding to the location of the maintenance station 3, but the present disclosure is not limited thereto.

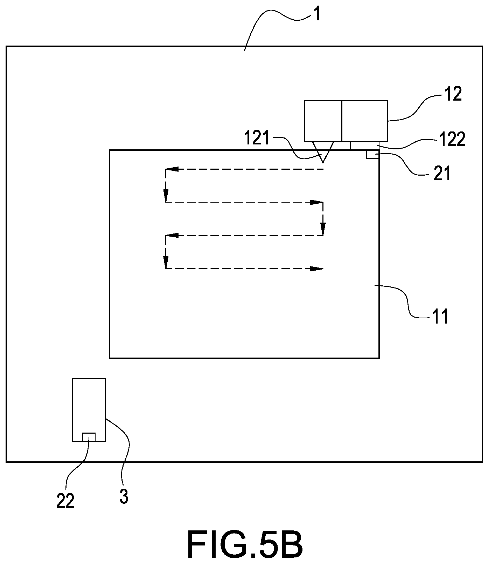

As shown in Fig. 5A, before starting printing, the 3D printer 1 controls the print head 12 to move toward the printing home location I0, thus perform positioning for the print head 12. As shown in Fig. 5B, when the first positioning sensor 21 senses the positioning point L0 of the print head 12, the 3D printer 1 performs initial positioning for the 2D nozzle 122 based on the first transversal offset C1 and the first longitudinal offset PI between the 2D nozzle 122 and the positioning point L0. Moreover, the 3D printer 1 performs initial positioning (return-to-zero position operation) for the 3D nozzle 121 based on the second transversal offset C2 and the second longitudinal offset P2 between the 3D nozzle 121 and the positioning point L0.

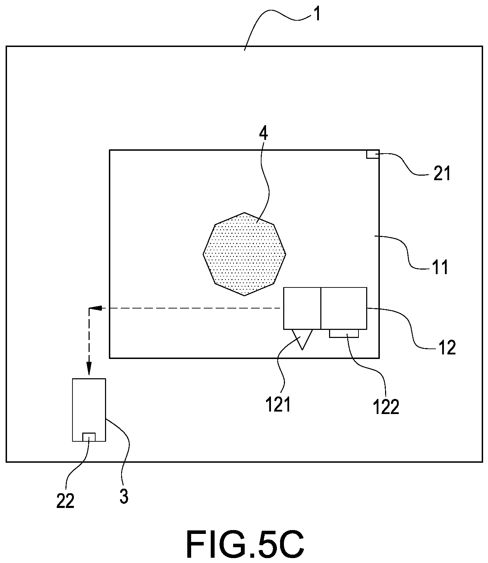

As shown in Fig. 5C, after initial positioning is finished for both of the 2D nozzle 122 and the 3D nozzle 121, the 3D printer 1 controls the print head 12 based on the imported 3D file such that the print head 12 is moved on the print platform 11 to print and color the printed object 4.

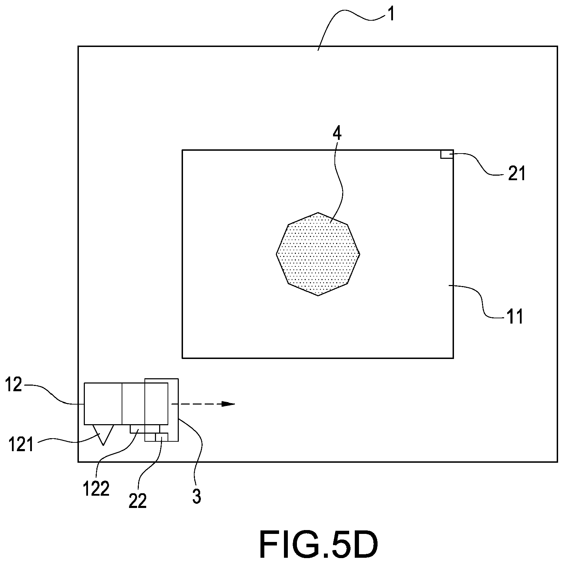

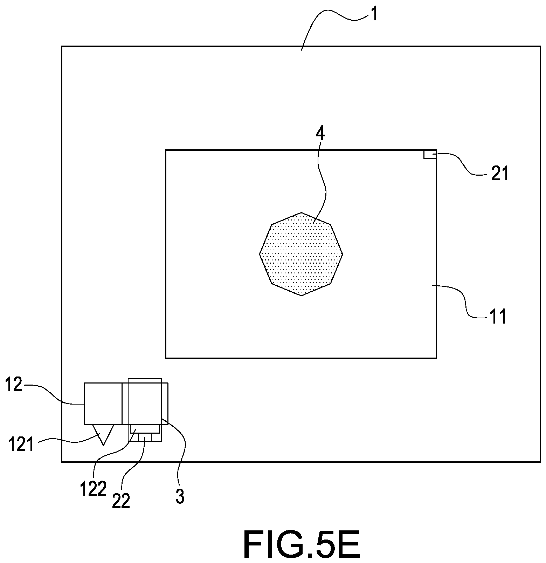

The 3D printer 1 controls the print head 12 to move toward the maintenance station 3 when the 3D printer 1 enters non-working status. Afterward, as shown in Fig. 5D, the 3D printer 1 determines that the positioning for the print head 12 is finished when the second positioning sensor 22 senses the positioning point L0 of the print head 12. Afterward, as shown in Fig. 5E, the 3D printer 1 performs compensation movement for the print head 12 based on the first transversal offset C1 and the first longitudinal offset PI between the 2D nozzle 122 and the positioning point L0. Therefore, the 2D nozzle 122 enters the maintenance station 3 and is precisely corresponding to the working zone of the maintenance station 3. In one embodiment, the working zone (not shown) of the maintenance station 3 has size equal to the size of the outlet (not shown) of the 2D nozzle 122.

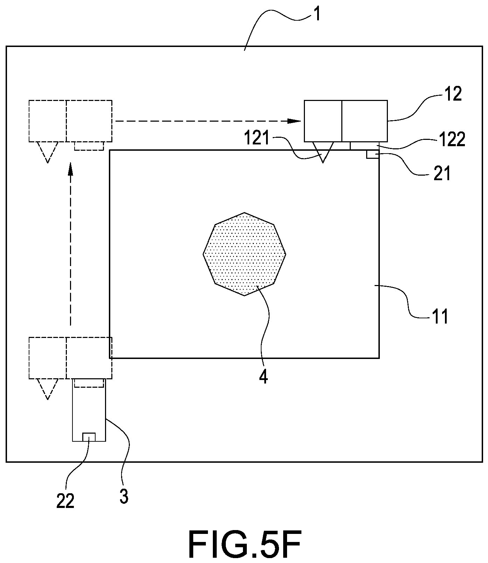

Finally, as shown in Fig. 5F, when the maintenance for the 2D nozzle 122 is finished and the 3D printer exits from non-working status (namely, returning to working status), the 3D printer 1 controls again the print head 12 to move toward the printing home location I0 to perform initial positioning for the 2D nozzle 122 and the 3D nozzle 121, and then continually prints the remaining portion (for example, the next printing layer) of the printed object 4.

As stated above, the 3D printer 1 generally controls the movement of the print head 12 with the stepper motor. In above embodiment, the 3D printer 1 has two separate positioning sensors 21 and 22, where the arrangement locations of the two positioning sensors 21 and 22 are corresponding to the locations of the printing home location I0 and the maintenance station 3. Because the printing home location I0 and the maintenance station 3 have different locations, the stepper motor has un-divisible problem for the control parameters thereof (namely the stepper motor has accumulated error) when the print head 12 is back-and-forth movement therebetween. The printing accuracy is influenced. In above embodiment, the 3D printer 1 needs two separate positioning sensors 21 and 22, the manufacture cost of the 3D printer 1 increases.

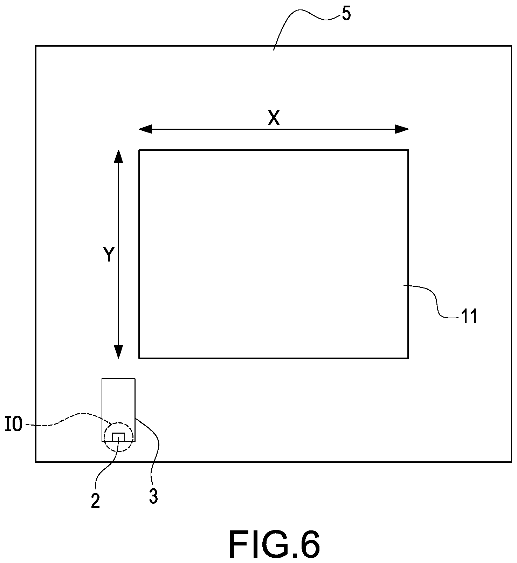

Fig. 6 is a top view for the 3D printer 1 according to the second embodiment of the present disclosure. Fig. 6 shows the 3D printer 5 according to the second embodiment of the present disclosure, and the 3D printer 5 is different with the 3D printer 1 in that the 3D printer 5 has only one common positioning sensor 2.

In the embodiment shown in Fig. 6, the maintenance station 3 is arranged outside the print platform 11, but the present disclosure is not limited thereto. The common positioning sensor 2 is arranged in the maintenance station 3 and the printing home location I0 is defined on the common positioning sensor 2. In other words, the maintenance station 3 and the printing home location I0 have the same coordinate with respect to the print platform 11 and corresponding to the same positioning sensor (namely, the common positioning sensor 2).

In this embodiment, when the 3D printer 5 enters working status, the 3D printer 5 mainly controls the print head 12 to move toward the printing home location I0 (equivalently moves toward the maintenance station 3). The positioning for the print head 12 is finished when the common positioning sensor 2 senses the positioning point L0 of the print head 12. Afterward, the 3D printer 5 simultaneously finishes the initial positioning (namely simultaneously performing return-to-zero position operation) for the 2D nozzle 122 and the 3D nozzle 121 based on the location offset between the positioning point L0 and the 2D nozzle 122 (and the 3D nozzle 121).

Moreover, the 3D printer 5 mainly controls the print head 12 to move toward the maintenance station 3 (equivalently moves toward the printing home location I0), and the positioning for the print head 12 is finished when the common positioning sensor 2 senses the positioning point L0 of the print head 12. Afterward, the 3D printer 5 controls the print head 12 for compensation movement based on the location offset between the positioning point L0 and the 2D nozzle 122 such that the 2D nozzle 122 can entirely enter the working zone of the maintenance station 3 to receive the maintenance operation of the maintenance station 3.

In this embodiment, the printing home location I0 (namely, the return-to-zero point for the print head 12) has the same coordinate as that of the maintenance station 3. Therefore, the stepper motor of the 3D printer 5 has no accumulated error problem and the printing preciseness of the 3D printer 5 can be greatly enhanced. The 3D printer 5 in this embodiment needs only one positioning sensor (namely, the common positioning sensor 2), and the manufacture cost can be effectively saved in comparison with the 3D printer 1 of the first embodiment.

## Claims

1. A 3D printer (1), comprising:
a print platform (11) configured to support a printed object (4);
a printing home location (I0) defined in the 3D printer (1);
a print head (12) comprising a 2D nozzle (122) for providing ink to color the printed object (4) and a 3D nozzle (121) for providing build material to construct the printed object (4), the print head (12) comprising a positioning point (L0), the 2D nozzle (122) and the 3D nozzle (121) respectively having a location offset with respect to the positioning point (L0);
a maintenance station (3); and
a positioning sensor (2) configured to sense the positioning point (L0) to facilitate positioning for the print head (12);
**characterized in that** the 3D printer (1) is configured to control the print head (12) to move toward the printing home location (I0) and control the positioning sensor (2) to sense the positioning point (L0) when the 3D printer (1) enters a working status; the 3D printer (1) is configured to perform an initial positioning for the 2D nozzle (122) and the 3D nozzle (121) based on the two location offsets and the positioning point (L0) and to start printing the printed object (4) after the initial positioning is finished;
wherein the 3D printer (1) is configured to control the print head (12) to move toward the maintenance station (3) and control the positioning sensor (2) to sense the positioning point (L0) when the 3D printer (1) enters a non-working status; the 3D printer (1) is configured to perform a compensation movement for the print head (12) based on the location offset (C1, P1) of the 2D nozzle (122) and the positioning point (L0) and to move the 2D nozzle (122) to enter a working zone of the maintenance station (3) for maintenance.

2. The 3D printer in claim 1, wherein the printing home location (I0) is defined on the positioning sensor (2).

3. The 3D printer in claim 1, wherein the location offsets comprises a transversal offset (C1, C2) with respect to an x-axis of the print platform (11) and a longitudinal offset (P1, P2) with respect to a y-axis of the print platform (11).

4. The 3D printer in claim 1, wherein the positioning sensor (2) is arranged in the maintenance station (3).

5. The 3D printer in claim 4, wherein the printing home location (I0) is defined on the positioning sensor (2).

6. The 3D printer in claim 1, further comprising a second positioning sensor (21), wherein the positioning sensor (22) is arranged in the maintenance station (3) and the second positioning sensor (21) is arranged on the print platform (11); the printing home location (I0) is defined on the second positioning sensor (21); wherein the 3D printer (1) is configured to control the print head (12) to move toward the printing home location (I0) and to control the second positioning sensor (21) to sense the positioning point (L0) when the 3D printer (1) enters the working status.

7. A method for control print head of 3D printer, the method applied to a 3D printer (1) comprising a print platform (11), a print head (12) having a 2D nozzle (122) for providing ink to color a printed object (4) and a 3D nozzle (121) for providing build material to construct the printed object (4), and a positioning sensor (2), the print head (12) having positioning point (L0), the 2D nozzle (122) and the 3D nozzle (121) respectively having a location offset with respect to the positioning point (L0), the method **characterized by** comprising:
a) controlling the print head (12) to move toward a printing home location (I0) and controlling the positioning sensor (2) to sense the positioning point (L0) when the 3D printer (1) enters a working status;
b) after step a), performing an initial positioning for the 2D nozzle (122) and the 3D nozzle (121) based on the two location offsets and the positioning point (L0);
c) starting printing a printed object on the print platform (11) after the initial positioning is finished;
d) controlling the print head (12) to move toward the maintenance station (3) and controlling the positioning sensor (2) to sense the positioning point (L0) when the 3D printer (1) enters a non-working status;
e) after step d), performing a compensation movement for the print head (12) based on the location offset (C1, P1) of the 2D nozzle (122) and the positioning point (L0) and moving the 2D nozzle (122) to enter a working zone of the maintenance station (3) for maintenance.

8. The method in claim 7, wherein the printing home location (I0) is defined on the positioning sensor (2).

9. The method in claim 7, further comprising:
f) determining whether the working status is resumed;
g) continually performing maintenance for the 2D nozzle (122) by the maintenance station (3) before resuming the working status; and
h) repeating step a) to step e) after resuming the working status.

10. The method in claim 7, wherein the location offsets comprises a transversal offset (C1, C2) with respect to an x-axis of the print platform (11) and a longitudinal offset (P1, P2) with respect to a y-axis of the print platform (11).

11. The method in claim 7, wherein the positioning sensor (2) is arranged in the maintenance station (3), and the printing home location (I0) is defined on the positioning sensor (2).

12. The method in claim 7, wherein the 3D printer (1) further comprises a second positioning sensor (21), the positioning sensor (22) is arranged in the maintenance station (3) and the second positioning sensor (21) is arranged on the print platform (11); the printing home location (I0) is defined on the second positioning sensor (21); wherein in step a), the 3D printer (1) is configured to control the print head (12) to move toward the printing home location (I0) and to control the second positioning sensor (21) to sense the positioning point (L0) when the 3D printer (1) enters the working status.

## Patentansprüche

1. 3D-Drucker (1), umfassend:
eine Druckplattform (11), die so konfiguriert ist, dass sie ein gedrucktes Objekt (4) hält;
einen im 3D-Drucker definierten Druckstandort (I0) (1);
einen Druckkopf (12), der eine 2D-Düse (122) zum Bereitstellen von Tinte zum Färben des bedruckten Objekts (4) und eine 3D-Düse (121) zum Bereitstellen von Aufbaumaterial zum Konstruieren des bedruckten Objekts (4) umfasst, wobei der Druckkopf (12) einen Positionierungspunkt (L0) umfasst, wobei die 2D-Düse (122) und die 3D-Düse (121) jeweils eine in Bezug auf den Positionierungspunkt (L0) versetzte Stelle aufweisen;
eine Wartungsstation (3); und
einen Positionierungssensor (2), der so konfiguriert ist, dass er den Positionierungspunkt (L0) erfasst, um die Positionierung für den Druckkopf (12) zu erleichtern;
**dadurch gekennzeichnet, dass** der 3D-Drucker (1) so konfiguriert ist, dass er den Druckkopf (12) so steuert, dass er sich in Richtung auf die Ausgangsposition (I0) des Druckers bewegt, und den Positionierungssensor (2) so steuert, dass er den Positionierungspunkt (L0) erfasst, wenn der 3D-Drucker (1) in einen Arbeitsstatus eintritt; der 3D-Drucker (1) so konfiguriert ist, dass er eine Anfangspositionierung für die 2D-Düse (122) und die 3D-Düse (121) auf der Grundlage der beiden Positionsverschiebungen und des Positionierungspunktes (L0) durchführt und mit dem Drucken des gedruckten Objekts (4) beginnt, nachdem die Anfangspositionierung beendet ist;
wobei der 3D-Drucker (1) so konfiguriert ist, dass er den Druckkopf (12) so steuert, dass er sich in Richtung der Wartungsstation (3) bewegt, und den Positionierungssensor (2) so steuert, dass er den Positionierungspunkt (L0) erfasst, wenn der 3D-Drucker (1) in einen Nicht-Betriebszustand eintritt; der 3D-Drucker (1) so konfiguriert ist, dass er eine Kompensationsbewegung für den Druckkopf (12) auf der Grundlage des Positionsversatzes (C1, P1) der 2D-Düse (122) und des Positionierungspunktes (L0) ausführt und die 2D-Düse (122) so bewegt, dass sie zur Wartung in eine Arbeitszone der Wartungsstation (3) eintritt.

2. 3D-Drucker nach Anspruch 1, wobei die Druckausgangsposition (I0) auf dem Positionierungssensor (2) definiert ist.

3. 3D-Drucker nach Anspruch 1, wobei der Ortsversatz einen transversalen Versatz (C1, C2) in Bezug auf eine x-Achse der Druckplattform (11) und einen longitudinalen Versatz (P1, P2) in Bezug auf eine y-Achse der Druckplattform (11) umfasst.

4. 3D-Drucker nach Anspruch 1, wobei der Positionssensor (2) in der Wartungsstation (3) angeordnet ist.

5. 3D-Drucker nach Anspruch 4, wobei die Druckausgangsposition (I0) auf dem Positionierungssensor (2) definiert ist.

6. 3D-Drucker nach Anspruch 1, weiterhin umfassend einen zweiten Positionierungssensor (21), wobei der Positionierungssensor (22) in der Wartungsstation (3) angeordnet ist und der zweite Positionierungssensor (21) auf der Druckplattform (11) angeordnet ist; die Druckausgangsposition (I0) ist auf dem zweiten Positionierungssensor (21) definiert; wobei der 3D-Drucker (1) konfiguriert ist, um den Druckkopf (12) zu steuern, um sich in Richtung der Druckausgangsposition (I0) zu bewegen, und um den zweiten Positionierungssensor (21) zu steuern, um den Positionierungspunkt (L0) zu erfassen, wenn der 3D-Drucker (1) in den Arbeitsstatus eintritt.

7. Verfahren zum Steuern eines Druckkopfes eines 3D-Druckers, wobei das Verfahren auf einen 3D-Drucker (1) angewendet wird, der eine Druckplattform (11), einen Druckkopf (12) mit einer 2D-Düse (122) zum Bereitstellen von Tinte, um ein gedrucktes Objekt (4) zu färben, und einer 3D-Düse (121) zum Bereitstellen von Aufbaumaterial, um das gedruckte Objekt (4) zu konstruieren, und einen Positionierungssensor (2) aufweist, wobei der Druckkopf (12) einen Positionierungspunkt (L0) aufweist, wobei die 2D-Düse (122) und die 3D-Düse (121) jeweils eine Position aufweisen, die bezüglich des Positionierungspunktes (L0) versetzt ist, wobei das Verfahren **dadurch gekennzeichnet ist, dass** es umfasst:
a) Steuerung des Druckkopfes (12), um sich in Richtung einer Druckausgangsposition (I0) zu bewegen, und Steuerung des Positionierungssensors (2), um den Positionierungspunkt (L0) zu erfassen, wenn der 3D-Drucker (1) in einen Arbeitsstatus eintritt;
b) nach Schritt a) eine anfängliche Positionierung für die 2D-Düse (122) und die 3D-Düse (121) auf der Grundlage der beiden Positionsverschiebungen und des Positionierungspunktes (L0) durchzuführen;
c) Beginn des Druckens eines Druckobjekts auf der Druckplattform (11) nach Abschluss der anfänglichen Positionierung;
d) Steuern des Druckkopfes (12), um sich in Richtung der Wartungsstation (3) zu bewegen, und Steuern des Positionierungssensors (2), um den Positionierungspunkt (L0) zu erfassen, wenn der 3D-Drucker (1) in einen Nicht-Betriebszustand übergeht;
e) nach Schritt d), Ausführen einer Kompensationsbewegung für den Druckkopf (12) basierend auf dem Positionsversatz (C1, P1) der 2D-Düse (122) und dem Positionierungspunkt (L0) und Bewegen der 2D-Düse (122), um in eine Arbeitszone der Wartungsstation (3) zur Wartung einzutreten.

8. Verfahren nach Anspruch 7, wobei die Druckausgangsposition (I0) auf dem Positionierungssensor (2) definiert ist.

9. Das Verfahren nach Anspruch 7, das ferner umfasst:
f) Feststellung, ob der Arbeitsstatus wieder aufgenommen wird;
g) kontinuierliche Wartung der 2D-Düse (122) durch die Wartungsstation (3) vor der Wiederaufnahme des Betriebszustandes; und
h) Wiederholung der Schritte a) bis e) nach Wiederaufnahme des Arbeitsstatus.

10. Verfahren nach Anspruch 7, wobei der Ortsversatz einen transversalen Versatz (C1, C2) in Bezug auf eine x-Achse der Druckplattform (11) und einen longitudinalen Versatz (P1, P2) in Bezug auf eine y-Achse der Druckplattform (11) umfasst.

11. Verfahren nach Anspruch 7, wobei der Positionierungssensor (2) in der Wartungsstation (3) angeordnet ist und die Druckausgangsposition (I0) auf dem Positionierungssensor (2) definiert ist.

12. Verfahren nach Anspruch 7, wobei der 3D-Drucker (1) ferner einen zweiten Positionierungssensor (21) aufweist, der Positionierungssensor (22) in der Wartungsstation (3) angeordnet ist und der zweite Positionierungssensor (21) auf der Druckplattform (11) angeordnet ist; der Druckheimatort (I0) wird auf dem zweiten Positionierungssensor (21) definiert; wobei in Schritt a) der 3D-Drucker (1) so konfiguriert ist, dass er den Druckkopf (12) so steuert, dass er sich in Richtung der Druckausgangsposition (I0) bewegt, und dass er den zweiten Positionierungssensor (21) so steuert, dass er den Positionierungspunkt (L0) erfasst, wenn der 3D-Drucker (1) in den Arbeitsstatus eintritt.

## Revendications

1. Une imprimante 3D (1), comprenant:
une plate-forme d'impression (11) configurée pour supporter un objet imprimé (4);
un emplacement d'origine d'impression (I0) défini au sein de l'imprimante 3D (1);
une tête d'impression (12) comprenant une buse 2D (122) pour fournir de l'encre pour le coloriage de l'objet imprimé (4) et une buse 3D (121) pour fournir de la matière de construction pour la réalisation de l'objet imprimé (4), la tête d'impression (12) comprenant un point de positionnement (L0), la buse 2D (122) et la buse 3D (121) ayant respectivement un décalage de position par rapport au point de positionnement (L0);
une station de maintenance (3); et
un capteur de positionnement (2) configuré pour détecter le point de positionnement (L0) pour faciliter le positionnement de la tête d'impression (12);
**caractérisée en ce que** l'imprimante 3D (1) est configurée pour commander la tête d'impression (12) pour se déplacer vers l'emplacement d'origine d'impression (I0) et commander le capteur de positionnement (2) pour détecter le point de positionnement (L0) lorsque l'imprimante 3D (1) entre dans un état de fonctionnement; l'imprimante 3D (1) étant configurée pour effectuer un positionnement initial pour la buse 2D (122) et de la buse 3D (121) sur la base des deux décalages de position et du point de positionnement (L0) et pour commencer à imprimer l'objet imprimé (4) une fois le positionnement initial terminé;
dans lequel l'imprimante 3D (1) est configurée pour commander la tête d'impression (12) pour se déplacer vers la station de maintenance (3) et pour commander le capteur de positionnement (2) pour détecter le point de positionnement (L0) lorsque l'imprimante 3D (1) entre un statut d'absence de fonctionnement; l'imprimante 3D (1) étant configurée pour effectuer un mouvement de compensation pour la tête d'impression (12) sur la base du décalage de position (C1, P1) de la buse 2D (122) et du point de positionnement (L0) et pour déplacer la buse 2D (122) pour entrer dans une zone de travail du poste de maintenance (3) pour maintenance.

2. L'imprimante 3D selon la revendication 1, dans laquelle l'emplacement initial d'impression (I0) est défini sur le capteur de positionnement (2).

3. L'imprimante 3D selon la revendication 1, dans laquelle les décalages de positionnement comprennent un décalage transversal (C1, C2) par rapport à un axe x de la plate-forme d'impression (11) et un décalage longitudinal (PI, P2) par rapport à un axe y de la plateforme d'impression (11).

4. L'imprimante 3D selon la revendication 1, dans laquelle le capteur de positionnement (2) est disposé dans le poste de maintenance (3).

5. L'imprimante 3D selon la revendication 4, dans laquelle l'emplacement initial d'impression (I0) est défini sur le capteur de positionnement (2).

6. L'imprimante 3D selon la revendication 1, comprenant en outre un deuxième capteur de positionnement (21), dans lequel le capteur de positionnement (22) est disposé dans la station de maintenance (3) et le deuxième capteur de positionnement (21) est disposé sur la plate-forme d'impression (11) ; l'emplacement initial d'impression (I0) est défini sur le deuxième capteur de positionnement (21); dans lequel l'imprimante 3D (1) est configurée pour commander la tête d'impression (12) pour qu'elle se déplace vers l'emplacement d'origine de l'impression (I0) et pour commander le deuxième capteur de positionnement (21) pour la détection du point de positionnement (L0) lorsque l'imprimante 3D (1) entre en état de fonctionnement.

7. Un procédé de commande d'une tête d'impression d'une imprimante 3D, le procédé étant appliqué à une imprimante 3D (1) comprenant une plate-forme d'impression (11), une tête d'impression (12) ayant une buse 2D (122) pour fournir de l'encre destinée au coloriage d'un objet imprimé (4) et une buse 3D pour fournir de la matière de réalisation pour former l'objet imprimé (4), et un capteur de positionnement (2), la tête d'impression (12) ayant un point de positionnement (L0), la buse 2D (122) et la buse 3D (121) ayant respectivement un décalage de positionnement par rapport au point de positionnement (L0), le procédé étant **caractérisé en ce qu'**il comporte les étapes consistant à :
a) commander la tête d'impression (12) pour un déplacement vers un emplacement d'origine d'impression (I0) et commander le capteur de positionnement (2) pour détecter le point de positionnement (L0) lorsque l'imprimante 3D (1) entre dans un état de fonctionnement;
b) à la suite de l'étape a), effectuer un positionnement initial pour la buse 2D (122) et la buse 3D (121) sur la base des deux décalages de positionnement et du point de positionnement (L0);
c) démarrer l'impression d'un objet imprimé sur la plate-forme d'impression (11) une fois le positionnement initial terminé;
d) commander la tête d'impression (12) pour un déplacement vers la station de maintenance (3) et commander le capteur de positionnement (2) pour détecter le point de positionnement (L0) lorsque l'imprimante 3D (1) entre dans un état de non-fonctionnement;
e) à la suite de l'étape d), effectuer un mouvement de compensation pour la tête d'impression (12) sur la base du décalage de position (C1, P1) de la buse 2D (122) et du point de positionnement (L0) et déplacer la buse 2D (122) pour entrer dans une zone de travail de la station de maintenance (3) pour maintenance.

8. Le procédé selon la revendication 7, dans lequel l'emplacement initial d'impression (I0) est défini sur le capteur de positionnement (2).

9. Le procédé selon la revendication 7, comprenant en outre:
f) la détermination de la reprise de l'état de travail;
g) une maintenance effectuée en continu pour la buse 2D (122) par la station de maintenance (3) avant de reprendre l'état de fonctionnement; et
h) la répétition des étapes a) à e) après avoir repris l'état de travail.

10. Le procédé selon la revendication 7, dans lequel les décalages de position comprennent un décalage transversal (C1, C2) par rapport à un axe x de la plate-forme d'impression (11) et un décalage longitudinal (PI, P2) par rapport à un axe y de la plate-forme d'impression (11).

11. Le procédé selon la revendication 7, dans lequel le capteur de positionnement (2) est disposé dans la station de maintenance (3), et l'emplacement d'origine d'impression (I0) est défini sur le capteur de positionnement (2).

12. Le procédé selon la revendication 7, dans lequel l'imprimante 3D (1) comprend en outre un deuxième capteur de positionnement (21), le capteur de positionnement (22) est disposé dans le poste de maintenance (3) et le deuxième capteur de positionnement (21) est disposé sur le plate-forme d'impression (11); l'emplacement initial d'impression (I0) est défini sur le deuxième capteur de positionnement (21); dans lequel à l'étape a), l'imprimante 3D (1) est configurée pour commander la tête d'impression (12) pour un déplacement vers l'emplacement d'origine d'impression (I0) et pour commander le deuxième capteur de positionnement (21) pour détecter le point de positionnement (L0) lorsque l'imprimante 3D (1) entre en état de fonctionnement.
